# EUROPEAN PATENT APPLICATION

(11) **EP 1 708 103 A2**
(43) Date of publication of application: **04.10.2006**
(21) Application number: 06090041.2
(22) Date of filing: 29.03.2006
(51) Int. Cl.: G06F 17/30

(54) **Trendy information notifying system and trendy information notifying method**

(30) Priority: 31.03.2005 JP 2005101251
(71) Applicant: NEC Corporation, Tokyo 108-01 (JP)
(72) Inventor: Ito, Naoko, NEC Corporation, Minato-ku, Tokyo 108-01 (JP)
(74) Representative: Wenzel & Kalkoff

(57) **Abstract**

A trendy information notifying system and a trendy information notifying method are provided, the system and method being capable of providing a trend for a state in a group composed of selected members to a person (entity) who enjoys service and promoting active communication. When a medium state monitoring unit detects a change in state of a medium, a state issuing unit produces presence information and outputs the produced information to a presence service unit. A presence information managing unit receives and stores presence information, and a presence list managing unit manages a presence list including presence information. In the case where a presence list has been updated, a judging unit judges whether or not the presence information is trendy information based on a judgment rule stored in a rule holding unit. A notifying unit outputs information indicating trendy information to a receiver's terminal in the case where the judging unit has made an affirmative judgment.

## Description

### BACKGROUND OF THE INVENTION

### Field of the Invention

The present invention relates to a trendy information notifying system and a trendy information notifying method for providing a trend for a state in a group composed of selected members.

### Description of the Related Art

A presence system for managing state information of a user (presence information) is known. The presence system includes: a presentity for producing presence information on a monitored person presence service unit for managing presence information; and a receiver's terminal for a state monitoring person called a watcher to receive presence information.

The watcher receives presence information on a specified presentity instead of receiving presence information on all presentities. The presentity specified by a watcher is referred to as a buddy (monitored person). The watcher prepares a buddy list indicating buddies (a list of monitored persons), and acquires presence information on buddies based on the buddy list. The presence service unit distributes to the watcher the presence information (presence list) on buddies indicated in the buddy list. The presence service unit distributes only the presence information on buddies permitted to be distributed to the watcher instead of distributing presence information on all buddies to the watcher. In general, in the case where presence information has been updated, the presence information is distributed to a watcher who monitors the corresponding presentity. A basic architecture of the presence system is indicated in RFC (Request For Comments) 2778.

There is provided a multimedia information distributing system in which a position of a user carrying a portable information terminal device is got hold of and information providing service utilizing the known position is carried out (refer to Japanese Patent Application Laid-Open No. 2002-15215 (paragraphs [0023] to [0034])).

Information from media such as television programs or journals which individuals view often becomes a topic for conversation among buddies. However, in the case where a person does not know the information at all, there is a possibility that such a person cannot catch up with such a topic, and cannot make communication with buddies well.

However, a system described in Japanese Patent Application Laid-Open No. 2002-15215 provides information on congestion or popularity as general statistical information, and thus, does not provide a trend for activities among specific buddies and is not always helpful for communication among buddies.

### SUMMARY OF THE INVENTION

In light of the foregoing problems, it is an object of the present invention to provide a trendy information notifying system and a trendy information notifying method capable of providing to a person who enjoys service a trend for a state in a group composed of selected members and promoting active communication.

According to the present invention, there is provided a trendy information notifying system for judging a trend (for example, preference) for a state of at least one information provider and notifying a judgment result to a monitoring entity's terminal, the system comprising: storage means for storing in advance information indicating an information provider specified by the monitoring entity's terminal; state information producing means for producing state information including information (for example, preference information or information by which preference can be grasped) which includes one's own state; state information managing means for storing the state information produced by the state information producing means in association with the information provider stored in the storage means; trendy information judging means for storing judgment rules in advance and judging whether or not the state information stored in the state information managing means conforms to the judgment rules; and notifying means for, in the case where the trendy information judging means decides that the judgment rules were satisfied, outputting state information to the monitoring entity's terminal as trendy information indicating a trend for a state of an information provider.

The storage means may store in advance information indicating the monitoring entity and information indicating the information provider, which are associated with each other; and the trendy information judging means may judge state information corresponding to the monitoring entity. With such a configuration, a trend for buddy's activities is obtained based on presence information on buddies specified by each watcher, and the trend is notified to such watcher, thereby making it possible to quickly provide the trend for the state in the group composed of the specified buddies.

The notifying means may store notification rules in advance, and may output trendy information to a monitoring entity's terminal in the case where the trendy information conforms to the notification rules. With such a configuration, trendy information required for watchers can be notified.

Reference medium control means for controlling a reference medium capable of referring to trendy information may be provided, and the reference medium control means may output trendy information to the reference medium in the case where the trendy information judging means decides that the judgment rules were satisfied. With such a configuration, means for making a quick reference as well as notifying trendy information can be provided.

Operation control means for controlling the notifying means and the reference medium control means may be provided, and the operation control means may store operational rules in advance and output trendy information to the notifying means and a reference medium in the case where trendy information conforms to the operational rules. With such a configuration, the notifying unit and the medium control unit can be operated in liaison with each other instead of being operated independently.

Managing means for managing information relating to at least one information provider may be provided, the managing means may store information indicating characteristics of an information provider, and the trendy information judging means may sample and judge state information based on the information indicating the characteristics of the information provider and the judgment rules. With such a configuration, judgment of trendy information can be made based on a rule in consideration of characteristics of a presentity.

According to the present invention, there is provided a trendy information notifying method for judging a trend for a state of at least one information provider and notifying a judgment result to a monitoring entity's terminal, said method comprising the steps of: storing in advance information indicating an information provider being specified; producing state information including information which indicates one's own state; storing the state information in association with the information provider; storing judgment rules in advance and judging whether or not the state information conforms to the judgment rules; and outputting state information to the monitoring entity's terminal as trendy information indicating a trend for a state of an information provider, in the case where the trendy information judging means decodes that the judgment rules are satisfied.

According to the present invention, there is an advantageous effect that a trend for activities of buddies is obtained based on presence information on buddies specified by each watcher, and the trend is notified to the watchers, thereby making it possible to quickly provide a trend for a state in a group composed of the specified buddies and an advantageous effect that trendy information required for the watchers can be notified. In addition, means for making a quick reference as well as notifying trendy information can be provided, and a notifying unit and a medium control unit can be operated in link with each other instead of being operated independently. In addition, judgment of trendy information can be made based on rules in consideration of characteristics of a presentity.

### BRIEF DESCRIPTION OF THE DRAWINGS

FIG. 1 is a block diagram depicting a first embodiment of a trendy information notifying system;
FIG. 2 is an illustrative view explaining an example of presence information;
FIG. 3 is an illustrative view explaining an example of a presence list;
FIG. 4 is a block diagram depicting an example of a configuration of a trendy information notifying system according to a server intensive management scheme;
FIG. 5 is an illustrative view explaining an example of an individual presence list;
FIG. 6 is a block diagram depicting another example of a configuration of a trendy information notifying system according to a server intensive management scheme;
FIG. 7 is a block diagram depicting an example of a configuration of a trendy information notifying system according to a distributed management scheme;
FIG. 8 is a block diagram depicting an example of a configuration of a trendy information notifying system in the case where a plurality of media and presentities are present;
FIG. 9 is a block diagram depicting a second embodiment of a trendy information notifying system;
FIG. 10 is a block diagram depicting a third embodiment of a trendy information notifying system;
FIG. 11 is a block diagram depicting a fourth embodiment of a trendy information notifying system; and
FIG. 12 is a block diagram depicting a fourth embodiment of a trendy information notifying system.

### PREFERRED EMBODIMENTS

### (First embodiment)

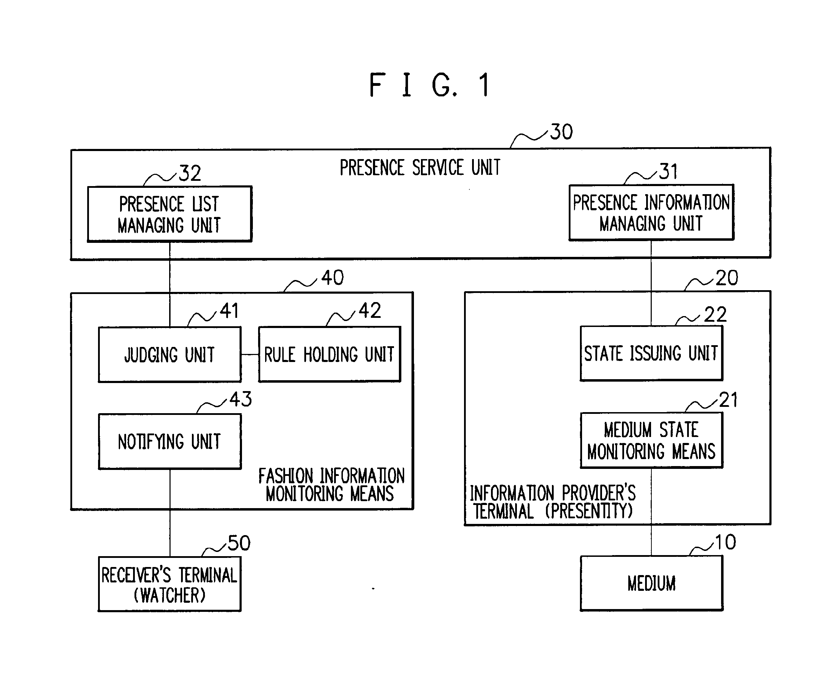

Hereinafter, a first embodiment of the present invention will be described with reference to the accompanying drawings. FIG. 1 is a block diagram depicting a first embodiment of a trendy information notifying system according to the present invention. The trendy information notifying system shown in FIG. 1 comprises a medium 10, an information provider's terminal (presentity) 20, a presence service unit 30, trendy information monitoring means 40, and a receiver's terminal (watcher) 50. The information provider's terminal 20 and the receiver's terminal are achieved by a personal computer or the like, respectively.

The medium 10 is provided as a medium for transmitting information and being referred to by buddies. In addition, the medium 10 outputs medium information to the presentity 20. The medium information is provided as information capable of specifying the information transmitted by the medium 10. For example, in the case where the medium 10 is a television image receiver and a television monitor, the medium information is provided as information such as a program identifier of an EPG (Electric Program Guide) capable of specifying a television program. In addition, in the case where the medium 10 is a journal, the medium information is provided as information indicated by a barcode or a two-dimensional barcode indicating a journal article.

The presentity 20 comprises a medium state monitoring unit 21 and a state issuing unit 22. The medium state monitoring unit 21 detects a state of the medium 10. The medium state monitoring unit 21 and the state issuing unit 22 are achieved by executing a program for achieving these functions with a CPU in a personal computer, for example.

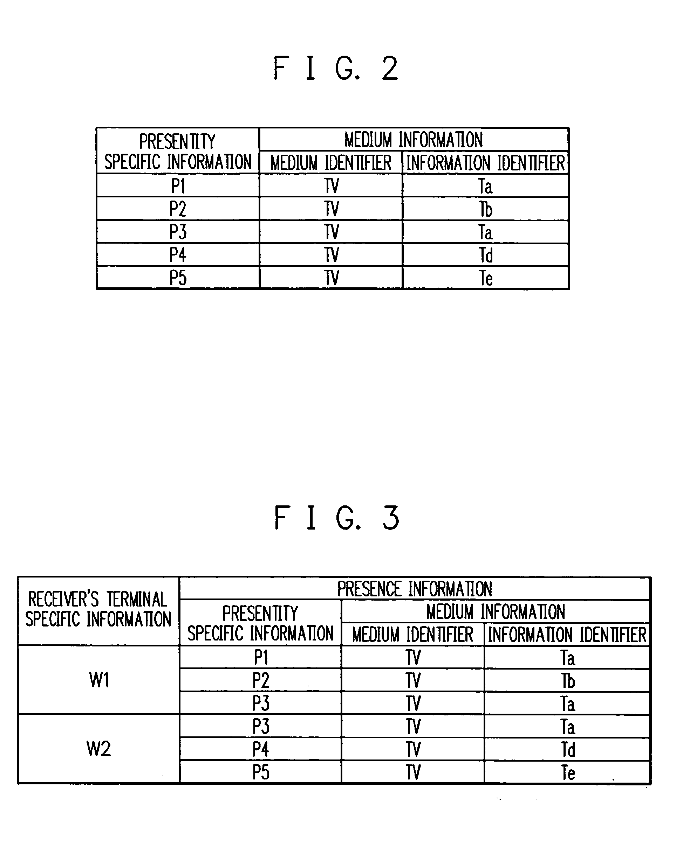

The state issuing unit 22 produces presence information and outputs the information to the presence service unit 30 in the case where the medium state monitoring unit 21 has detected a change in the state of the medium 10. FIG. 2 is an illustrative view explaining an example of presence information. As shown in FIG. 2, the presence information is provided as information including "presentity specific information" and "medium information". The "presentity specific information" is provided as information capable of specifying the presentity 20 such as a presentity name. The "medium information" is provided as information capable of specifying the medium 10 and is provided as information including a "medium identifier" indicating a medium or a section of information and an "information identifier" capable of specifying information.

For example, in the case where the medium 10 is a television program, the medium state monitoring unit 21 and the state issuing unit 22 are achieved by an audience rate measuring instrument or the like. In addition, for example, in the case where the medium 10 is a barcode or a two-dimensional barcode indicating a journal article, the medium state monitoring unit 21 and the state issuing unit 22 are achieved by a barcode reader or the like for reading a barcode or a two-dimensional barcode.

The presence service unit 30 comprises a presence managing unit 31 and a presence list managing unit 32. The presence information managing unit 31 receives and stores presence information outputted from the presentity 20.

The presence list managing unit 32 manages a presence list. The presence list is provided as information indicating presence information for each presentity specified by a watcher. FIG. 3 is an illustrative view explaining an example of a presence list. As shown in FIG. 3, the presence list is provided as information including "receiver's terminal specific information" and "presence information". The "receiver's terminal specific information" is provided as information capable of specifying a receiver's terminal such as a terminal ID.

The trendy information monitoring means 40 comprises a judging unit 41, a rule holding unit 42, and a notifying unit 43.

The judging unit 41 acquires the corresponding "receiver's terminal specific information" in the case where the "medium information" in the presence list managed by the presence list managing unit 32 has been changed. The judging unit 41 compares "medium information" which corresponds to the acquired "receiver's terminal specific information, and judges whether or not the changed "medium information" is trendy information, based on a judgment rule stored in the rule holding unit 42.

The rule holding unit 42 stores a judgment rule for the judging unit 41 to make a judgment of trendy information. The judgment rule is provided as a rule for, in the case where medium information for each presentity is provided as a majority of information, judging that the medium information is trendy information.

The notifying unit 43 outputs information indicating trendy information to a receiver's terminal 50 in the case where the judging unit 41 has made an affirmative judgment.

The receiver's terminal 50 receives and displays information indicating trendy information outputted from the notifying unit 43.

A trendy information notifying system is achieved by a server intensive management scheme or a distributed management scheme utilizing a presence server.

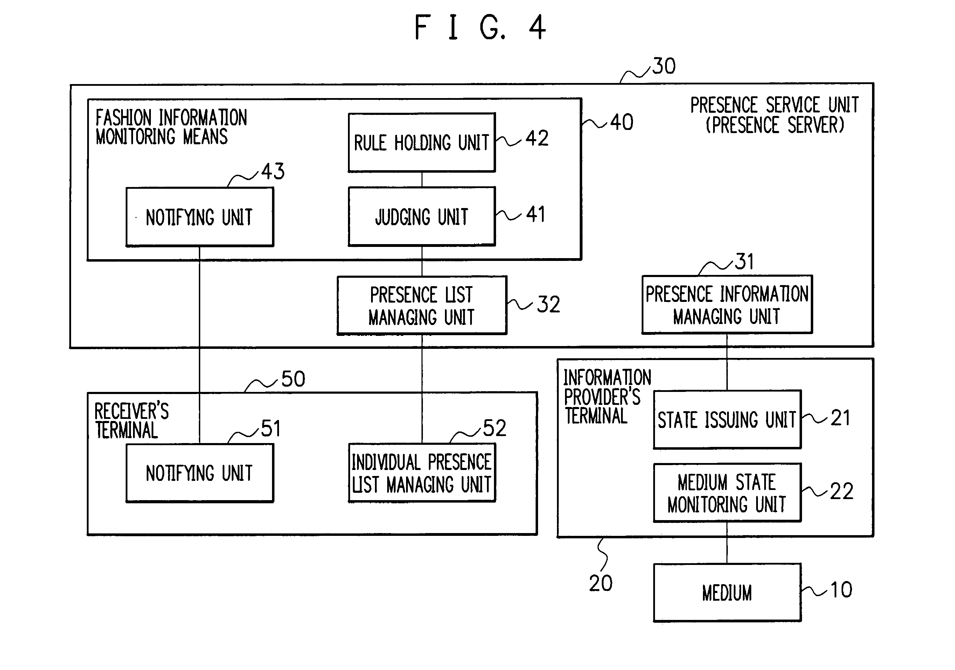

FIG. 4 is a block diagram depicting an example of a configuration of a trendy information notifying system according to a server intensive management scheme. In the trendy information notifying system according to the server intensive management scheme shown in FIG. 4, a receiver's terminal 50 comprises a notifying unit 51 and an individual presence list managing unit 52. In the case where the receiver's terminal 50 is achieved by a personal computer, the notifying unit 51 and the individual presence list managing unit 52 are achieved by executing a program for achieving these functions with a CPU.

In the trendy information notifying system according to the server intensive management scheme shown in FIG. 4, the presence information managing unit 31, the presence list managing unit 32, and the trendy information monitoring means 40 are intensively managed in a presence server. Therefore, the judging unit 41 and the notifying unit 43 in the trendy information monitoring means 40 are achieved by a CPU executing a program for achieving their functions. In the configuration shown in FIG. 4, the receiver's terminal 50 and the presence server make communications with each other via a communication network such as the Internet. In addition, the information provider's terminal 20 and the presence server make communications with each other via a communication network such as the Internet. Therefore, the notifying unit 51 in the receiver's terminal 50; and the notifying unit 43 and the presence information managing unit 31 in the presence server; and the information issuing unit 21 in the information provider's terminal 20 each include an interface unit with respect to a communication network such as the Internet. The notifying unit 51 and the individual presence list managing unit 52 may be provided at another terminal. In addition, the individual presence list managing unit 52 may not be provided. The other-constitution is identical to that shown in FIG. 1. A duplicate description is omitted here.

In the receiver's terminal 50, the notifying unit 51 includes a display device such as a liquid crystal display device or an organic EL (Electroluminescence) display device, for example, and displays information. The notifying unit 51 receives and displays information indicating trendy information outputted from the notifying unit 43 in the case where the judgment 41 has judged that the changed medium information is trendy information.

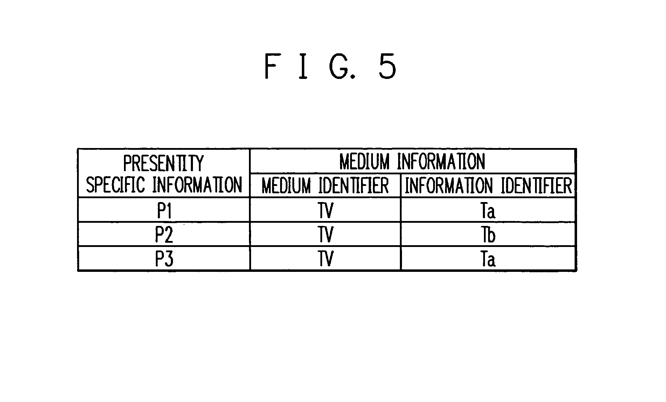

The individual presence list managing unit 52 manages an individual presence list indicating presence information for each of the specified presentities. The individual presence list managing unit 52 acquires presence information having the receiver's terminal specific information indicating itself from a presence list managed by the presence list managing unit 32. That is, in the case where a number of watchers exist, the presence list managing unit 32 in the presence server manages a presence list relating to each watcher, while the individual presence list managing unit 52 manages a presence list relating to the receiver's terminal (watcher) 50 having the management unit incorporated therein. FIG. 5 is an illustrative view explaining an example of an individual presence list. As shown in FIG. 5, the individual presence list is provided as information including "presentity specific information" and "medium information".

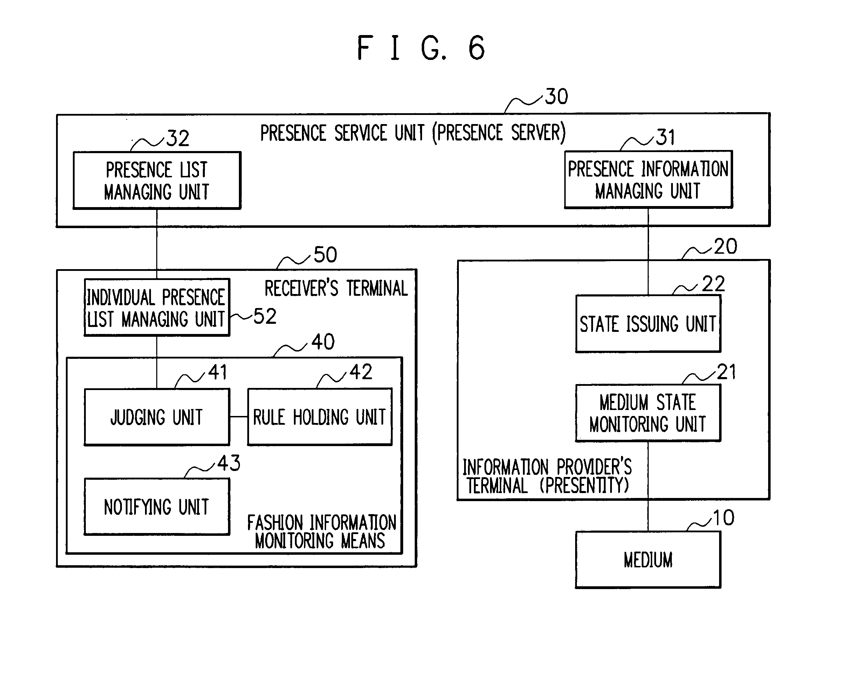

FIG. 6 is a block diagram depicting another example of a configuration of a trendy information notifying system according to a server intensive management scheme. In the trendy information notifying system according to the server intensive management scheme shown in FIG. 6, a receiver's terminal 50 comprises trendy information monitoring means 40 and an individual presence list managing unit 52. The other constitution is identical to that shown in FIG. 4. A duplicate description is omitted here.

In the trendy information notifying system according to the server intensive management scheme shown in FIG. 6, a presence information managing unit 31 and a presence list managing unit 32 are integrally managed in a presence server, and the trendy information monitoring means 40 is provided at the receiver's terminal 50.

A judging unit 41 compares "medium information" in the case where the "medium information" has been changed in an individual presence list managed by the individual presence list managing unit 52, and judges whether or not the changed "medium information" is trendy information, based on a rule stored in a rule holding unit 42.

A notifying unit 43 is achieved by a display device such as a liquid crystal display device or an organic EL display device, for example, and displays information. This notifying unit outputs and displays information indicating trendy information in the case where the judging unit 41 has judged that the changed medium information is trendy information.

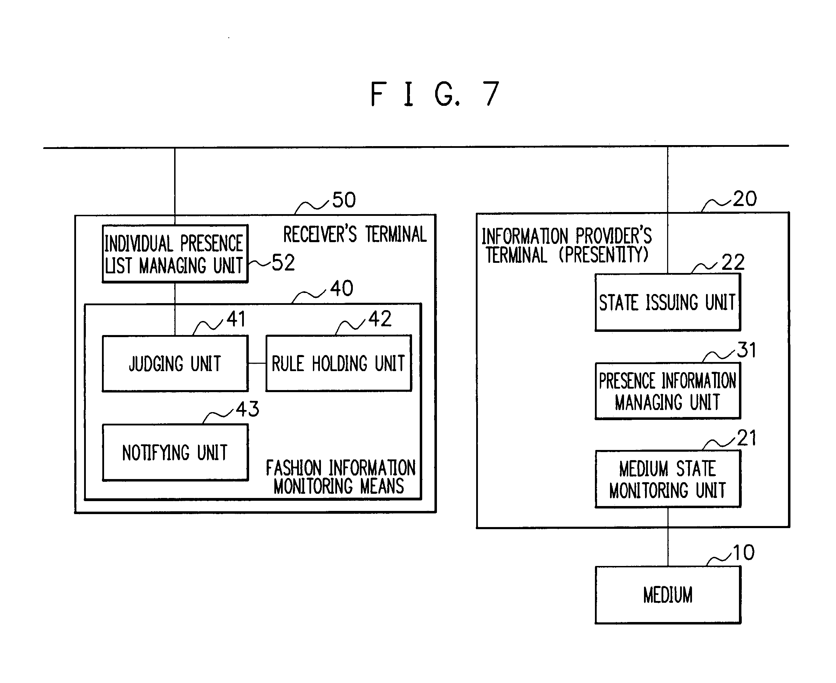

FIG. 7 is a block diagram depicting an example of a configuration of a trendy information notifying system according to a distributed management scheme. The trendy information notifying system according to the distributed management scheme shown in FIG. 7 comprises a medium 10, a presentity 20, and a receiver's terminal 50.

The presentity 20 comprises a medium state monitoring unit 21, a state issuing unit 22, and a presence information managing unit 31. In this case, an individual presence list managing unit 52 in the receiver's terminal 50 has an interface unit for communication via a communication network such as the Internet. The other constitution is identical to that shown in FIG. 6. A duplicate description is omitted here.

The presence information managing unit 31 receives and stores presence information outputted from the state issuing unit 22 of the presentity 20 which includes the presence information managing unit 31.

The presence list managing unit 52 acquires presence information stored in the presence information managing unit 31 and manages the acquired information as an individual presence list.

In the first embodiment, the state information producing means is achieved by the presentity 20. The trendy information judging means is achieved by the judging unit 41. The notifying means is achieved by the notifying unit 43. The state information managing means is achieved by the presence service unit 30.

Now, an operation of the first embodiment will be described with reference to FIG. 1. Hereinafter, a description will be given with respect to a case in which one medium 10, one presentity 20, and one receiver's terminal 50 are provided.

When utilizing a trendy information notifying system, a buddy registers information relating to one's own identity. The presentity 20 operated by the buddy outputs to a presence information managing unit 31 information including "presentity specific information" for specifying one's own identity. In addition, a watcher specifies a buddy to be monitored. A receiver's terminal 50 operated by the watcher outputs to a presence list managing unit 32 information including "receiver's terminal specific information" for specifying one's own identity and "presentity specific information" indicating a buddy to be specified. The presence list managing unit 32 registers the received "receiver's terminal specific information" and "presentity specific information" in a presence list. Therefore, monitored person (entity) information storage means for storing in advance information indicating a monitored person (entity) specified by a monitoring person's (entity's) terminal is achieved as part of a presence list managing unit 32 (specifically, a storage unit used by the presence list managing unit 32). When the receiver's terminal 50 specifies "presentity specific information", the information may be selected from the "presentity specific information" registered in the presence information managing unit 31.

Now, a description will be given here, assuming that registration has been made by a buddy and a watcher. First, an operation of a presentity 20 will be described below. When a medium state monitoring unit 21 detects a change in the state of a medium 10 referred to by a buddy by providing new medium information or the like, a state issuing unit 22 produces presence information and outputs the produced information to a presence service unit 30. For example, the presentity 20 specified by presentity specific information "P10" (hereinafter, referred to as presentity P10) produces presence information including medium information whose medium identifier is "M" and whose information identifier is "I", and outputs the produced information to the presence service unit 30.

A presence information managing unit 31 receives and stores the latest presence information on the presentity 20. In addition, a presence list managing unit 32 reflects the latest presence information on the presentity 20 in a presence list based on the presentity specific information.

For example, in the case where a receiver's terminal 50 which is monitoring the presentity P10 is indicated by receiver's terminal specific information "W1", medium information on data in which receiver's terminal specific information is "W1" and presentity specific information is "P10" is updated.

Now, an operation of a trendy information monitoring means 40 will be described below. A judging unit 41 judges whether or not updated medium information is trendy information based on a judgment rule stored in a rule holding unit 42 in the case where a presence list managed by the presence list managing unit 32 has been updated. In addition, a notifying unit 43 outputs to the receiver's terminal 50 information for prompting a user to refer to trendy information in the case where the judging unit 41 has made an affirmative judgment.

For example, when it is judged that medium information in which medium identifier is "M" and information identifier is "I" is trendy information, the notifying unit 43 outputs information for the receiver's terminal 50 whose receiver's terminal specific information is "W1" (hereinafter, referred to as receiver's terminal W1) to refer to medium information in which medium identifier is "M" and information identifier is "I".

Now, an operation of the receiver's terminal 50 will be described below. The receiver's terminal 50 receives and displays information indicating trendy information outputted from the notifying unit 43.

For example, a receiver's terminal W1 receives and displays medium information in which medium identifier is "M" and information identifier is "I".

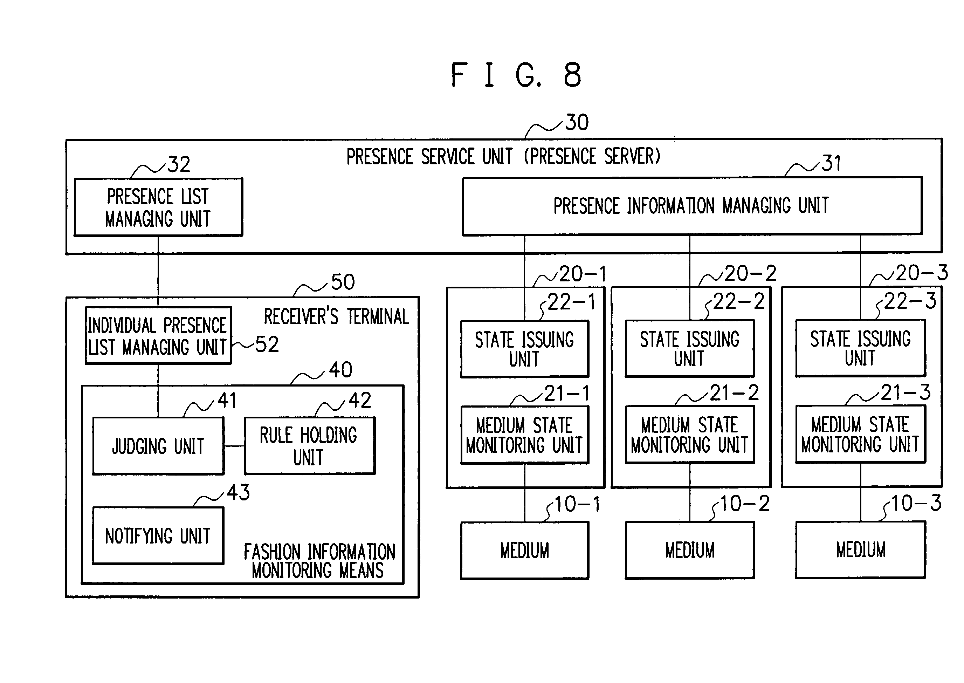

Referring now to FIG. 8, a description will be given with respect to an operation of the first embodiment in the case where a plurality of media and presentities are present. FIG. 8 is a block diagram depicting an example of a configuration of a trendy information notifying system. In an example shown in FIG. 8, as compared with an example shown in FIG. 3, a medium 10 is replaced with a plurality of media 10-1 to 10-3; a presentity 20 is replaced with presentities 20-1 to 20-3; a medium state monitoring unit 21 is replaced with medium state monitoring units 21-1 to 21-3; and a state issuing unit 22 is replaced with state issuing units 22-1 to 22-3.

Hereinafter, a description will be given by example of a case in which a receiver's terminal W1 monitors states of presentities P1, P2, and P3. In addition, it is assumed that a judgment rule for, in the case where medium information for each presentity is provided as a majority of information, judging that the medium information is trendy information, is registered in a rule holding unit 42.

First, an operation of the presentity P1 will be described below. After a television program "Ta" has been provided as new medium information, when a medium state monitoring unit 21-1 detects a change in the state of a medium 10-1, a state issuing unit 22-1 produces presence information including medium information in which the medium identifier is "TV" and the information identifier is "Ta", and outputs the produced information to a presence service unit 30.

A presence information managing unit 31 stores presence information including medium information in which the medium identifier is "TV" and the information identifier is "Ta", as the latest presence information on the presentity P1 (refer to FIG. 2).

In addition, a presence list managing unit 32 updates data in which receiver's terminal specific information is "W1" and presentity specific information is "P1" to the date in which a medium identification is "TV" and an information identifier is "Ta" (refer to FIG. 3). In addition, the presence list managing unit 32 transmits to the receiver's terminal W1 the presence information in which presentity specific information is "P1", the medium identifier is TV", and the information identifier is "Ta".

Now, an operation of the receiver's terminal W1 will be described below. The receiver's terminal W1 receives presence information in which presentity specific information is "P1", the medium identifier is "TV", and the information identifier is "Ta", and updates an individual presence list managing unit 52 (refer to FIG. 5).

A judging unit 41 judges whether or not the updated medium information is trendy information, based on a judgment rule stored in a rule holding unit 42. Here, in presentities P2 and P3, assuming that a buddy does not refer to a medium, and does not detect states of media 10-2 and 10-3, respectively, medium information on the presentities P2 and P3 in an individual presence list is not inputted. Therefore, it is judged that only the presentity P1 refers to the medium information in which the medium identifier is "TV" and the information identifier is "Ta"; and it is judged that medium information for each presentity in the receiver's terminal W1 is not a majority of information. Thus, it is not judged that the medium information in which the medium identifier is "TV" and the information identifier is "Ta" is trendy information.

Now, an operation of the presentity P2 will be described below. After a television program "Tb" has been provided as new medium information, when a medium state monitoring unit 21-2 detects a change in the state of a medium 10-2, a state issuing unit 22-2 produces presence information including medium information in which the medium identifier is "TV" and the information identifier is "Tb", and outputs the produced information to a presence service unit 30.

A presence information managing unit 31 stores presence information including medium information whose medium identifier is "TV" and whose information identifier is "Tb", as the latest presence information on the presentity P2 (refer to FIG. 2).

In addition, the presence list managing unit 32 updates data in which receiver's terminal specific information is "W1" and presentity specific information is "P2" to the data in which a medium identification is "TV" and an information identifier is "Tb" (refer to FIG. 3). In addition, the presence list managing unit 32 transmits to the receiver's terminal W1 the presence information in which "presentity specific information" is "P2", the medium identifier is "TV" and the information identifier is "Tb".

Now, an operation of the receiver's terminal W1 will be described below. The receiver's terminal W1 receives presence information in which presentity specific information is "P2", the medium identifier is "TV", and the information identifier is "Tb", and updates an individual presence list managing unit 52 (refer to FIG. 5).

A judging unit 41 judges whether or not the updated medium information is trendy information, based on a judgment rule stored in the rule holding unit 42. Here, for the medium information on the presentity P1, a medium identifier is "TV", and an information identifier is "Ta". In addition, in the presentity P3, assuming that a buddy does not refer to a medium, and does not detect a state of the medium 10-3, the medium information on the presentity P3 in an individual presence list is not inputted. Therefore, it is judged that only the presentity P2 refers to the medium information in which the medium identifier is "TV" and the information identifier is "Tb", and it is judged that the medium information for each presentity in the receiver's terminal W1 is not a majority of information. Thus, it is not judged that the medium information in which medium identifier is "TV" and information identifier is "Tb" is trendy information.

Now, an operation of the presentity P3 will be described below. After a television program "Ta" has been provided as new medium information, when a medium state monitoring unit 21-3 detects a change in the state of the medium 10-3, the state issuing unit 22-3 produces presence information including medium information in which the medium identifier is "TV" and the information identifier is "Ta", and outputs the produced information to the presence service unit 30.

The presence information managing unit 31 stores presence information including medium information in which the medium identifier is "TV" and the information identifier is "Ta", as the latest presence information on the presentity P3 (refer to FIG. 2).

In addition, the presence list managing unit 32 updates data in which receiver's terminal specific information is "W1" and presentity specific information is "P3" to the data in which a medium identification is "TV" and an information identifier is "Ta" (refer to FIG. 3). In addition, the presence list managing unit 32 transmits to the receiver's terminal W1 presence information in which presentity specific information is "P3", the medium identifier is "TV", and the information identifier is "Ta".

Now, an operation of the receiver's terminal W1 will be described below. The receiver's terminal W1 receives presence information in which presentity specific information is "P3", a medium identifier is "TV", and an information identifier is "Ta", and updates the individual presence list managing unit 52 (refer to FIG. 5).

A judging unit 41 judges whether or not the updated medium information is trendy information based on a judgment rule stored in the rule holding unit 42. Here, for the medium information on the presentity P1, a medium identifier is "TV", and an information identifier is "Ta", and for the medium information on the presentity P2, a medium identifier is "TV", and an information identifier is "Tb". Therefore, it is judged that the presentities P1 and P3 refer to the medium information in which the medium identifier is "TV" and the information identifier is "Ta", and it is judged the medium information for each presentity in the receiver's terminal W1 is a majority of information. Thus, it is judged that the medium information in which the medium identifier is "TV" and the information identifier is "Ta" is trendy information.

In the judging unit 41, when the medium information in which the medium identifier is "TV" and the information identifier is "Ta" is trendy information, a notifying unit 43 displays a dialogue screen for prompting a user to refer to a television program "Ta".

As has been described above, according to the foregoing first embodiment, a trend for activities of buddies is obtained based on presence information on buddies specified by each watcher, and the trend is notified to the watchers, whereby a trend in a state in a group composed of the specified buddies can be provided quickly. For example, there is an advantageous effect that sharing of a topic with buddies can be achieved and active communication can be promoted by monitoring what television programs buddies watch and checking television programs which a majority of buddies watch.

### (Second embodiment)

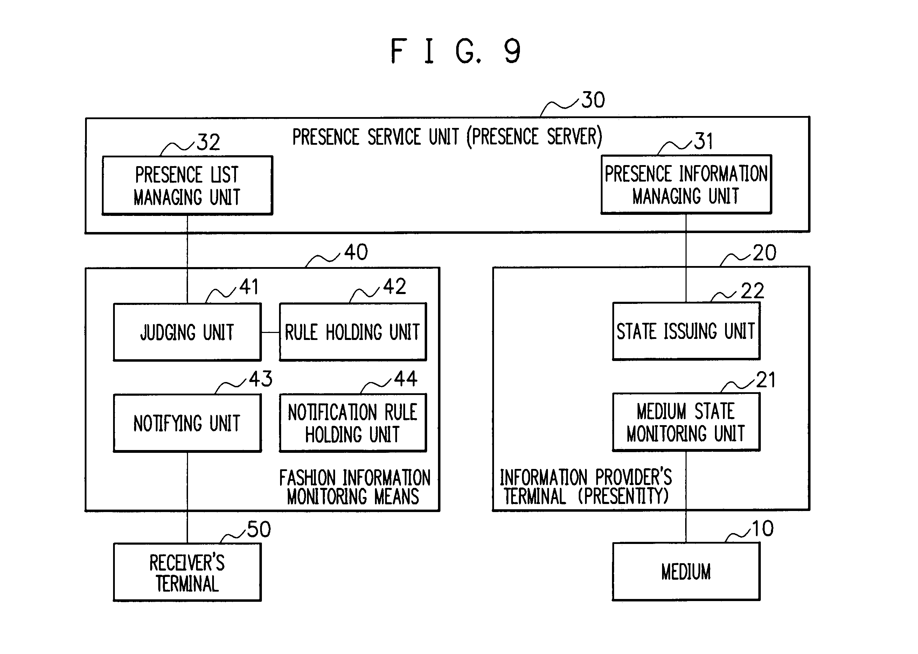

Now, a second embodiment of the present invention will be described with reference to the accompanying drawings. FIG. 9 is a block diagram depicting a second embodiment of a trendy information notifying system according to the present invention. In the trendy information notifying system shown in FIG. 9, trendy information monitoring means 40 newly comprises a notification rule holding unit 44. The other constitution of the trendy information notifying system is identical to that in the first embodiment (refer to FIG. 1). A duplicate description is omitted here.

In the second embodiment, the notifying means is achieved by a notifying unit 43 and a notification rule holding unit 44.

The notification rule holding unit 44 stores a notification judgment rule for judging whether or not the notifying unit 43 carries out notification. For example, this holding unit stores a rule for, in the case where a receiver's terminal 50 has already referred to the trendy information, judging that no notification is carried out.

The notifying unit 43 judges whether to notify trendy information based on the notification judgment rule in the case where the judging unit 41 has made an affirmative judgment, and outputs to the receiver's terminal 50 information indicating trendy information in the case where the notifying unit has made an affirmative judgment.

As has been described above, according to the foregoing second embodiment, in addition to the advantageous effect according to the first embodiment, there is an advantageous effect that trendy information necessary for watchers can be notified.

### (Third embodiment)

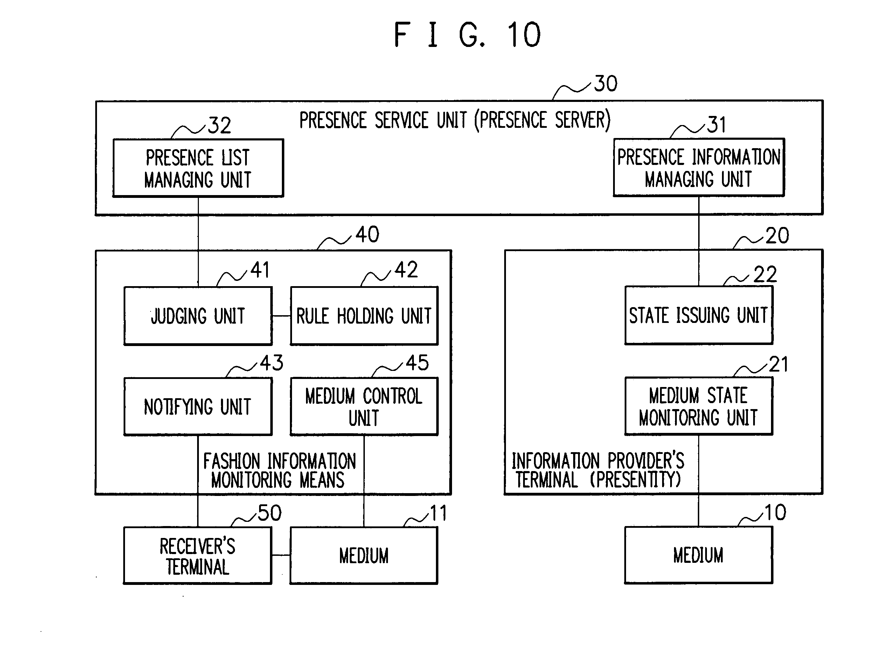

Now, a third embodiment of the present invention will be described with reference to the accompanying drawings. FIG. 10 is a block diagram depicting a third embodiment of a trendy information notifying system. The trendy information notifying system shown in FIG. 10 comprises a medium 11, and trendy information monitoring means 40 newly comprises a medium control unit 45. The other constitution of the trendy information notifying system is identical to that in the first embodiment (refer to FIG. 1)). A duplicate description is omitted here.

In the third embodiment, reference medium control means is achieved by the medium control unit 45.

The medium 11 is provided as a medium managed by a receiver's terminal 50 and is provided as a medium for a watcher to refer to trendy information.

The medium control unit 45 has a function of executing a process for controlling the medium 11. The medium control unit 45 actually presents the medium 11 with information indicated by trendy information in the case where the judging unit 41 has made an affirmative judgment.

For example, in the case where trendy information indicates a television program "Ta", and the medium 11 is a television image receiver and a television monitor, the medium control unit 45 causes the medium 11 to display the television program. In addition, in the case where the medium 11 is an image recording device such as a video tape recorder, the medium control unit 45 executes a process for automatically recording the television program in the medium 11.

In the case where a presentity and a receiver's terminal 50 coexist, a medium 10 managed by the presentity 20 and the medium 11 managed by the receiver's terminal 50 may be identical to each other.

As described above, according to the foregoing third embodiment, in addition to the advantageous effects according to the first and second embodiments, means can be provided for making a quick reference as well as notifying trendy information.

### (Fourth embodiment)

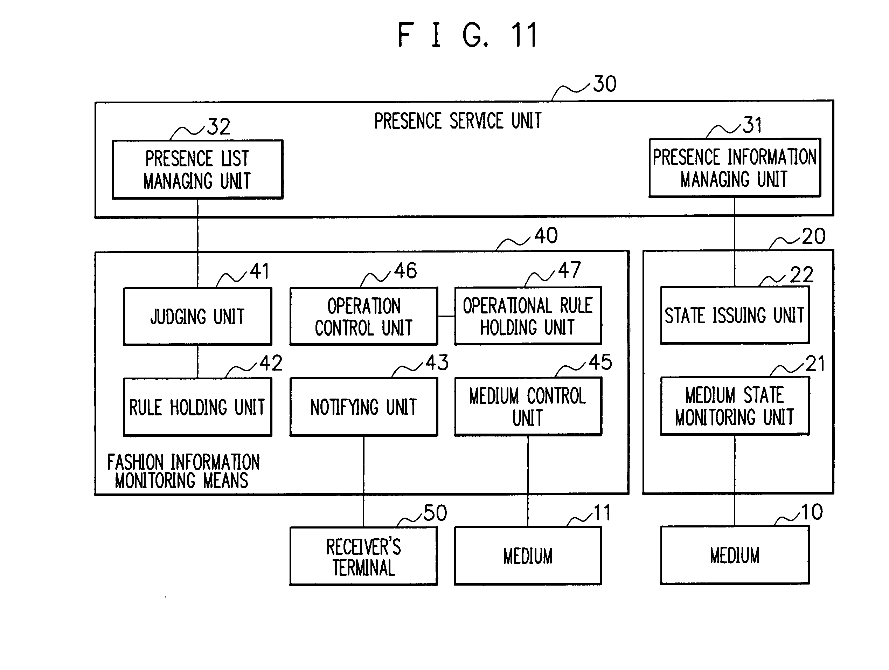

Now, a fourth embodiment of the present invention will be described with reference to the accompanying drawings. FIG. 11 is a block diagram depicting a fourth embodiment of a trendy information notifying system according to the present invention. In the trendy information notifying system shown in FIG. 11, trendy information monitoring means 40 newly comprises an operation control unit 46 and an operational rule holding unit 47. The other constitution of the trendy information notifying system is identical to that in the third embodiment (refer to FIG. 10). A duplicate description is omitted here.

In the fourth embodiment, the operation control means is achieved by the operation control unit 46 and the operational rule holding unit 47.

The operation control unit 46 controls operations of a notifying unit 43 and a medium control unit 45 based on an operational rule stored in the operational rule holding unit 47.

The operational rule holding unit 47 stores an operational rule for the operation control unit 46 to control the operations of the notifying unit 43 and the medium control unit 45. For example, in the case where the medium 11 is a television image receiver, television monitor and a video tape recorder, this holding unit stores an operational rule for, when a user watches another television program, the notifying unit 43 to automatically record a television program indicated by trendy information without carrying out notification.

According to the foregoing fourth embodiment, in addition to the advantageous effects according to the first to third embodiments, the notifying unit 43 and the medium control unit 45 can be operated in liaison with each other instead of being operated independently.

### (Fifth embodiment)

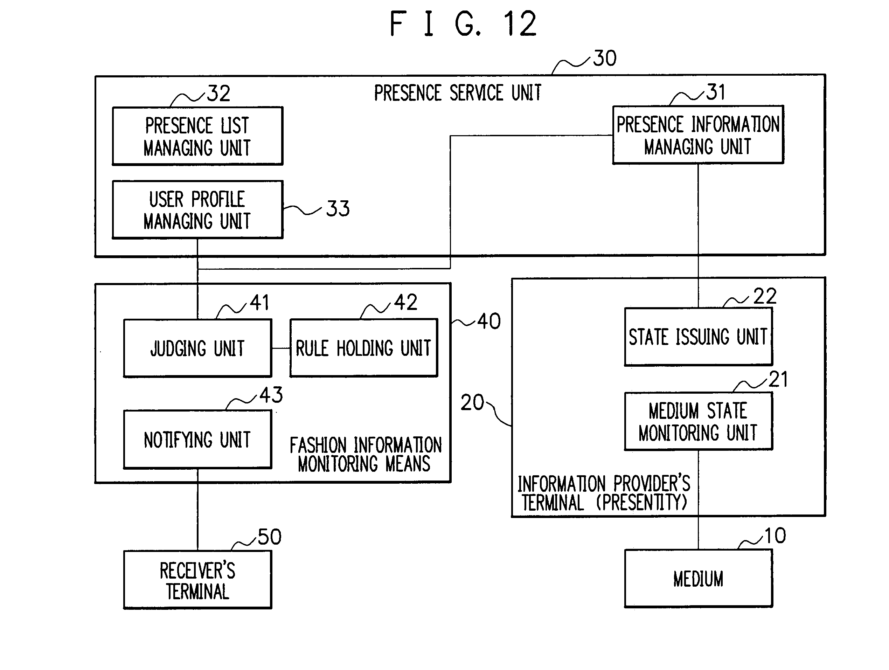

Now, a fifth embodiment of the present invention will be described with reference to the accompanying drawings. FIG. 12 is a block diagram depicting a fifth embodiment of a trendy information notifying system according to the present invention. In the trendy information notifying system shown in FIG. 12, a presence service unit 30 newly comprises a user profile managing unit 33. The other constitution of the trendy information notifying system is identical to that in the first embodiment (refer to FIG. 1). A duplicate description is omitted here.

In the fifth embodiment, monitored person information managing means is achieved by the user profile managing unit 33.

The user profile managing unit 33 stores and manages the user profile information as information relating to buddies. The user profile information is provided as information indicating "presentity specific information", "buddy's age", and "buddy's gender" or the like.

A judging unit 41 specifies a presentity which conforms to a judgment rule stored in a rule holding unit 42, by referring to the user profile information stored in the user profile managing unit 33. In addition, the judging unit acquires a presence list of the specified presentities from a presence list managing unit, and makes a judgment of trendy information.

For example, in the case where a judgment rule stored in the rule holding unit 42 is provided as a rule for judging that information referred to by a majority of buddies whose generation is the same as that of watchers is trendy information, the judging unit 41 specifies a presentity having the "buddy's age" whose generation is the same as that of the watcher, refers to the presence information on presentities, and decides that the information is trendy information in the case where there exists any further items of information referred to by a majority of presentities.

As has been described above, according to the foregoing fifth embodiment, in addition to the advantageous effects according to the first to fourth embodiments, judgment of trendy information can be made based on rules in consideration of the characteristics of presentities.

While each of the foregoing embodiments has presented a case in which the presentity terminal and the receiver terminal are different from each other, these terminals may be identical to each other. In addition, the receiver's terminal may manage a medium, and a watcher and a buddy may be an identical user. As is the case with other presentities, a watcher him/herself may be managed as a buddy. In that case, presence information which is owned by a watcher him/herself, monitored by a medium state monitoring unit and outputted by a state issuing unit, may be acquired inside of the receiver's terminal.

The present invention can be effectively applied in order to provide a person who enjoys service with a trend in a group composed of selected members.

## Claims

1. A trendy information notifying system for judging a trend for a state of at least one information provider and notifying a judgment result to a monitoring entity's terminal, said system comprising:
storage means for storing in advance information indicating an information provider specified by the monitoring entity's terminal;
state information producing means for producing state information including information which includes one's own state;
state information managing means for storing the state information produced by the state information producing means in association with the information provider stored in the storage means;
trendy information judging means for storing judgment rules in advance and judging whether or not the state information stored in the state information managing means conforms to the judgment rules; and
notifying means for, in the case where the trendy information judging means decides that the judgment rules were satisfied, outputting state information to the monitoring entity's terminal as trendy information indicating a trend for a state of an information provider.

2. The trendy information notifying system as claimed in claim 1,
wherein the storage means stores in advance information indicating the monitoring entity and information indicating the information provider, which are associated with each other, and the trendy information judging means judges state information corresponding to the monitoring entity.

3. The trendy information notifying system as claimed in claim 1,
wherein the notifying means stores notification rules in advance, and outputs trendy information to a monitoring entity's terminal in the case where the trendy information conforms to the notification rules.

4. The trendy information notifying system as claimed in claim 1, further comprising reference medium control means for controlling a reference medium capable of referring to trendy information,
wherein the reference medium control means outputs trendy information to the reference medium in the case where the trendy information judging means decides that the judgment rules were satisfied.

5. The trendy information notifying system as claimed in claim 4, further comprising operation control means for controlling the notifying means and the reference medium control means,
wherein the operation control means stores operational rules in advance, and outputs trendy information to the notifying means and a reference medium in the case where trendy information conforms to the operational rules.

6. The trendy information notifying system as claimed in claim 1, further comprising managing means for managing information relating to the information provider,
wherein the managing means stores information indicating characteristics of the information provider, and the trendy information judging means samples and judges state information based on the information indicating the characteristics of the information provider and the judgment rules.

7. A trendy information notifying method for judging a trend for a state of at least one information provider and notifying a judgment result to a monitoring entity's terminal, said method comprising the steps of:
storing in advance information indicating an information provider being specified;
producing state information including information which indicates one's own state;
storing the state information in association with the information provider;
storing judgment rules in advance and judging whether or not the state information conforms to the judgment rule; and
outputting state information to the monitoring entity's terminal as trendy information indicating a trend for a state of the information provider, in the case where the trendy information judging means decides that the judgment rules were satisfied.
